# EUROPEAN PATENT SPECIFICATION

(11) **EP 3 633 229 B1**
(45) Date of publication and mention of the grant of the patent: **25.12.2024**
(21) Application number: 18805455.5
(22) Date of filing: 23.05.2018
(51) Int. Cl.: F16F 9/46, F16F 9/32, F16F 9/06

(54) **SHOCK ABSORBER**
STOSSDÄMPFER
AMORTISSEUR

(30) Priority: 26.05.2017 JP 2017104552
(43) Date of publication of application: 08.04.2020
(73) Proprietor: Hitachi Astemo, Ltd., Hitachinaka-shi, Ibaraki 312-8503 (JP)
(72) Inventor: AKIBA, Naoto, Hitachinaka-shi Ibaraki 312-8503 (JP)
(74) Representative: Hoffmann Eitle
(86) International application number: PCT/JP2018/019784
(87) International publication number: WO 2018/216716

(56) References cited:
- DE-A1- 4 445 705
- DE-C1- 19 547 910
- JP-A- 2014 144 733
- JP-A- 2014 144 733
- JP-A- 2015 158 255
- JP-A- S58 128 982
- JP-U- S6 194 639

## Description

### TECHNICAL FIELD

The invention relates to shock absorbers installed in suspension devices or other like devices of automobiles and rail vehicles and intended to control a hydraulic fluid flow relative to piston rod strokes to generate damping forces.

### BACKGROUND ART

The shock absorbers are generally so configured that a piston to which a piston rod is coupled is slidably fitted into a cylinder in which a hydraulic fluid is sealingly contained, and are designed to control the fluid flow created by the sliding motion of the piston in the cylinder relative to piston rod strokes using damping force generating mechanisms to generate damping forces. Some damping force generating mechanisms are provided with an extension-side damping force generating mechanism and a compression-side damping force generating mechanism in order to differentiate damping force characteristics at the extension side from those at the compression side of the piston rod. Some of the extension-side damping force generating mechanisms and of the compression-side damping force generating mechanisms can be controlled in damping force characteristics by controlling the energizing current applied to a solenoid.

For example, the damping force generating mechanisms described in Japanese Unexamined Patent Application Publication (Kokai) No. 9264364, hereinafter Patent Literature 1, each have an extension-side damping valve and a compression-side damping valve which can control damping force characteristics by controlling the energizing current applied to a solenoid. The extension-side damping valve and the compression-side damping valve are arranged in series along the axial direction of a cylinder within a case.

DE 195 47 910 C1 also forms part of the state of the art relative to the present disclosure.

### SUMMARY OF INVENTION

### TECHNICAL PROBLEM

According to the damping force generating mechanisms described in the Patent Literature 1, the extension-side and compression-side damping valves are arranged together within the case. Such arrangement increases a space occupied exclusively by the case, which radially extends outside an outer tube, and therefore deteriorates vehicle mountability.

The invention has been made in light of the foregoing matter. The invention includes a compression-side damping force generating mechanism and an extension-side damping force generating mechanism. An issue to be solved by the invention is to provide a shock absorber designed to reduce an exclusively-occupied space of the damping force generating mechanisms, which extends in a radial direction of the cylinder.

### SOLUTION TO PROBLEM

To solve the above-mentioned issue, there is provided a shock absorber as recited in claim 1 below.

The dependent claims define particular embodiments of each respective aspect.

The shock absorber according to the one embodiment of the invention makes it possible to reduce an exclusively-occupied space of the compression-side damping force generating mechanism and the extension-side damping force generating mechanism, which extends along a radial direction of the cylinder.

### BRIEF DESCRIPTION OF DRAWINGS

Fig. 1 is a cross-sectional view of a shock absorber according to a first embodiment.
Fig. 2 is a cross-sectional view of the shock absorber according to the first embodiment.
Fig. 3 is an enlarged cross-sectional view of a base valve of the shock absorber according to the first embodiment and a peripheral area to the base valve.
Fig. 4 is an enlarged cross-sectional view of a rod guide of the shock absorber according to the first embodiment and a peripheral area to the rod guide.
Fig. 5 is an enlarged cross-sectional view of a compression-side damping force generating mechanism of the shock absorber according to the first embodiment.
Figs. 6 (a) and 6(b) are respectively elevation and bottom views of the shock absorber according to the first embodiment.
Fig. 7 is a cross-sectional view of a shock absorber according to a second embodiment.
Fig. 8 is a cross-sectional view of a shock absorber according to a third embodiment.

### DESCRIPTION OF EMBODIMENTS

One embodiment of the invention is discussed below in detail with reference to the drawings.

Shock absorbers 1a, 1b and 1c according to the present embodiment are of a biflow type. The shock absorbers 1a, 1b and 1c according to the present embodiment are each employed as a vertical damper for a rail vehicle, which is longitudinally mounted between a vehicle body and a wagon. The present embodiment refers to the longitudinally-mounted vertical dampers for rail vehicles as examples. The shock absorbers 1a, 1b and 1c may be applied to horizontal dampers or yaw dampers. The shock absorbers 1a, 1b and 1c according to the present embodiment may even be employed as dampers for automobiles.

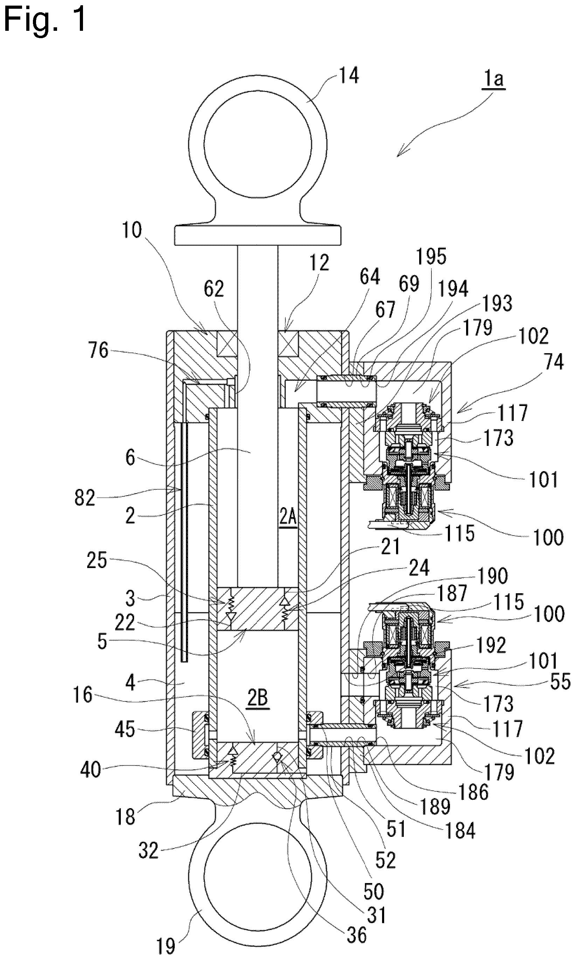

The shock absorber 1a according to a first embodiment will be explained with reference to Figs. 1 to 6.

As illustrated in Fig. 1, the shock absorber 1a according to the first embodiment is provided with an outer tube 3 disposed around a cylinder 2 in a concentric manner. A reservoir 4 is formed between the cylinder 2 and the outer tube 3. A piston 5 is slidably fitted in the cylinder 2. The piston 5 divides an interior of the cylinder 2 into two chambers, namely, a cylinder's upper chamber 2A and a cylinder's lower chamber 2B. The cylinder's lower chamber 2B corresponds to one side chamber of the cylinder 2, and the cylinder's upper chamber 2A corresponds to the other side chamber of the cylinder 2. Coupled to the piston 5 corresponds to a lower end of a piston rod 6.

An upper end side of the piston rod 6 extends through the cylinder's upper chamber 2A to extend through a rod guide 10 and a seal member 12, which are mounted on an upper end portion of the cylinder 2 and of the outer tube 3, and further extends out of the cylinder 2. A ring-like bracket 14 is integrally formed at an upper end of the piston rod 6. The ring-like bracket 14 is intended for coupling to the vehicle body side. The cylinder 2 is provided with a base valve 16 in a lower end portion thereof. The base valve 16 separates the cylinder's lower chamber 2B and the reservoir 4. The outer tube 3 has a lower end opening that is closed by a cover 18. In the cover 18, a ring-like bracket 19 is formed in an integral manner. The ring-like bracket 19 is intended for coupling to the wagon side. The cylinder 2 sealingly contains oil functioning as a hydraulic fluid. The reservoir sealingly contains oil and gas.

The piston 5 is provided with passages 21 and 22 which allow communication between the cylinder's upper chamber 2A and the cylinder's lower chamber 2B. The passage 21 is provided with a relief valve 24. The relief valve 24 is opened when pressure of the oil on the cylinder's upper chamber 2A side reaches predetermined pressure to release the pressure toward the cylinder's lower chamber 2B. The passage 22 is provided with a relief valve 25. The relief valve 25 is opened when pressure of the oil on the cylinder's lower chamber 2B side reaches predetermined pressure to release the pressure toward the cylinder's upper chamber 2A.

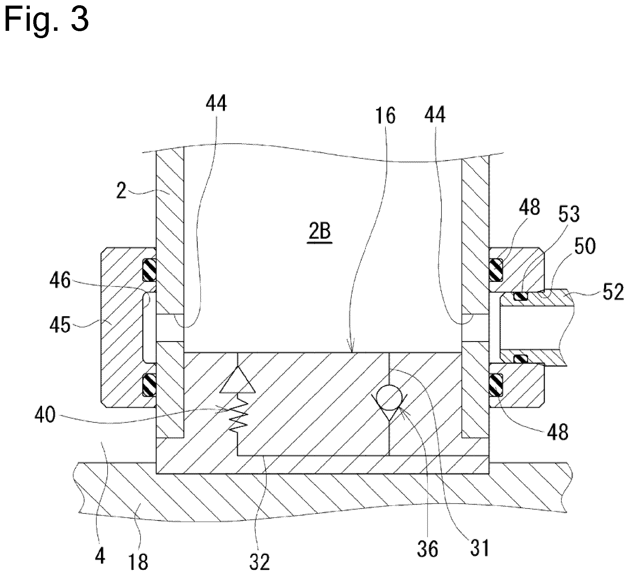

As illustrated in Fig. 1 and Fig. 3, the base valve 16 is provided with passages 31 and 32 which allow communication between the cylinder's lower chamber 2B and the reservoir 4. A seal member, not shown, liquid-tightly seals a gap between an outer peripheral surface of the base valve 16 and an inner peripheral surface of the cylinder 2. The passage 31 is provided with a check valve 36. The check valve 36 allows the oil to flow only in a direction from the reservoir 4 to the cylinder's lower chamber 2B. The passage 32 is provided with a relief valve 40. The relief valve 40 is opened when pressure of the oil on the cylinder's lower chamber 2B side reaches predetermined pressure to release the pressure toward the reservoir 4.

A plurality of circulation holes 44 are formed in a peripheral wall of the cylinder 2 on the side close to the base valve 16 at intervals in a circumferential direction. A cylindrical guide member 45 is arranged around an outer peripheral surface of the cylinder 2 so as to enclose the circulation holes 44. A circular groove portion 46 is formed in an inner peripheral surface of the guide member 45. The circular groove portion 46 of the guide member 45 is liquid-tightly sealed by a plurality of seal members 48, 48 arranged between an inner peripheral surface of the guide member 45 and the outer peripheral surface of the cylinder 2. A support hole 50 is formed in a peripheral wall of the guide member 45. The support hole 50 extends through the peripheral wall of the guide member 45 in a radial direction and comes into communication with the circular groove portion 46. An outer tube-side support hole 51 is formed in a peripheral wall portion of the outer tube 3 at a position opposite the support hole 50 of the guide member 45. The outer tube-side support hole 51 extends through the peripheral wall portion of the outer tube 3 in the radial direction. A compression-side communicating pipe 52 extends through the support hole 50 of the guide member 45 and the outer tube-side support hole 51 of the outer tube 3. The compression-side communicating pipe 52 extends in the radial direction of the cylinder 2. A seal member 53 liquid-tightly seals a gap between an outer peripheral surface of the compression-side communicating pipe 52 and an inner peripheral surface of the support hole 50 of the guide member 45. The compression-side communicating pipe 52 communicates with a compression-side damping force generating mechanism 55. The compression-side damping force generating mechanism 55 is arranged in a lower-end outer peripheral surface of the outer tube 3. The cylinder's lower chamber 2B thus comes into communication with the compression-side damping force generating mechanism 55 through the circulation holes 44, the circular groove portion 46 of the guide member 45, and the compression-side communicating pipe 52. The compression-side damping force generating mechanism 55 corresponds to a first damping force generating mechanism.

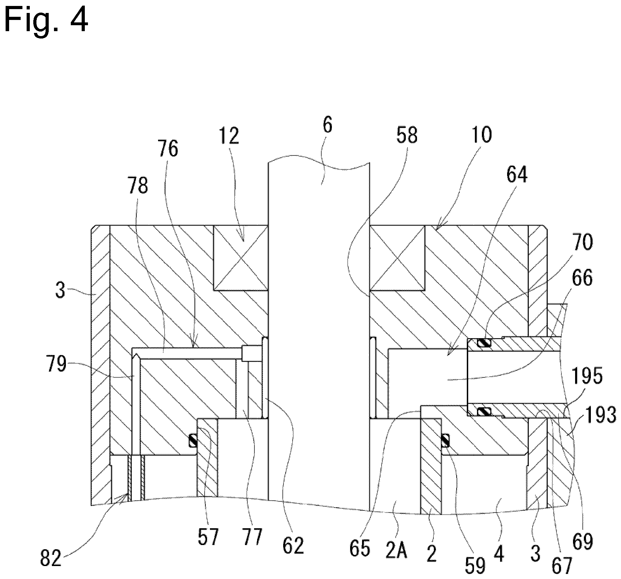

As illustrated in Fig. 1 and Fig. 4, the rod guide 10 is intended to close an upper end opening of the cylinder 2 and of the outer tube 3. The rod guide 10 is intended to guide an axial movement of the piston rod 6. The rod guide 10 corresponds to a closing member. An inner peripheral surface of the outer tube 3 contacts an outer peripheral surface of the rod guide 10. The rod guide 10 has a holding recessed portion 57, which is formed in a lower surface of the rod guide 10. An upper end of the cylinder 2 is connected to the holding recessed portion 57. Formed in the rod guide 10 is an insertion hole 58 through which the piston rod 6 extends. An upper-end outer peripheral surface of the cylinder 2 and an inner peripheral surface of the holding recessed portion 57 of the rod guide 10 are liquid-tightly sealed by a seal member 59. A seal member 12 is arranged between an upper inner peripheral surface of the insertion hole 58 and an outer peripheral surface of the piston rod 6. The seal member 12 slidably supports the piston rod 6 and thus liquid-tightly seals a gap between the inner peripheral surface of the insertion hole 58 and the outer peripheral surface of the piston rod 6.

A circular groove portion 62 is formed in a lower inner peripheral surface of the insertion hole 58 of the rod guide 10. The circular groove portion 62 opens into the cylinder's upper chamber 2A. A first flow path 64 is formed in the rod guide 10. The first flow path 64 communicates with the cylinder's upper chamber 2A. The first flow path 64 includes a first axial flow path 65 and a first radial flow path 66. The first axial flow path 65 extends from the cylinder's upper chamber 2A in an axial direction of the cylinder 2. The first radial flow path 66 communicates with an upper end of the first axial flow path 65 and extends along the radial direction of the cylinder 2. An outer tube-side support hole 67 is formed in the peripheral wall portion of the outer tube 3. The outer tube-side support hole 67 radially extends through the peripheral wall portion of the outer tube 3 at a position opposite the first radial flow path 66. An extension-side communicating pipe 69 extends through a part of the first radial flow path 66 and the outer tube-side support hole 67. The extension-side communicating pipe 69 extends in the radial direction of the cylinder 2. A seal member 70 is arranged between an outer peripheral surface of the extension-side communicating pipe 69 and an inner peripheral surface of the first radial flow path 66. The seal member 70 liquid-tightly seals a gap between the outer peripheral surface of the extension-side communicating pipe 69 and the inner peripheral surface of the first radial flow path 66. The extension-side communicating pipe 69 communicates with an extension-side damping force generating mechanism 74. The extension-side damping force generating mechanism 74 is arranged in an upper-end outer peripheral surface of the outer tube 3. The cylinder's upper chamber 2A thus comes into communication with the extension-side damping force generating mechanism 74 through the first flow path 64 and the extension-side communicating pipe 69. The flow path extension-side damping force generating mechanism 74 corresponds to a second damping force generating mechanism.

A second flow path 76 is formed in the rod guide 10. The second flow path 76 communicates with the cylinder's upper chamber 2A. The second flow path 76 includes a second axial flow path 77, a second radial flow path 78, and a second axial connecting hole 79. The second axial flow path 77 extends from the cylinder's upper chamber 2A in the axial direction of the cylinder 2. The second radial flow path 78 communicates with an upper end of the second axial flow path 77 and extends along the radial direction of the cylinder 2. The second axial connecting hole 79 communicates with the second radial flow path 78 at a position away from the piston rod 6 and extends along the axial direction of the cylinder 2. The second radial flow path 78 communicates with the circular groove portion 62 that is provided in the inner peripheral surface of the rod guide 10 and opens into the cylinder's upper chamber 2A. The second axial connecting hole 79 is connected to a pipe 82 for the reservoir, which brings the pipe 82 for the reservoir and the second flow path 76 into communication. The pipe 82 for the reservoir vertically extends within the reservoir 4. A lower end of the pipe 82 for the reservoir is arranged within the oil in vicinity to the guide member 45 within the reservoir 4. The second flow path 76 and the pipe 82 for the reservoir correspond to a reservoir path.

The following discussion explains the extension-side damping force generating mechanism 74 and the compression-side damping force generating mechanism 55. As the extension-side damping force generating mechanism 74 and the compression-side damping force generating mechanism 55 are similarly configured, the discussion merely explains the compression-side damping force generating mechanism 55 and omits the explanation of the extension-side damping force generating mechanism 74 as necessary.

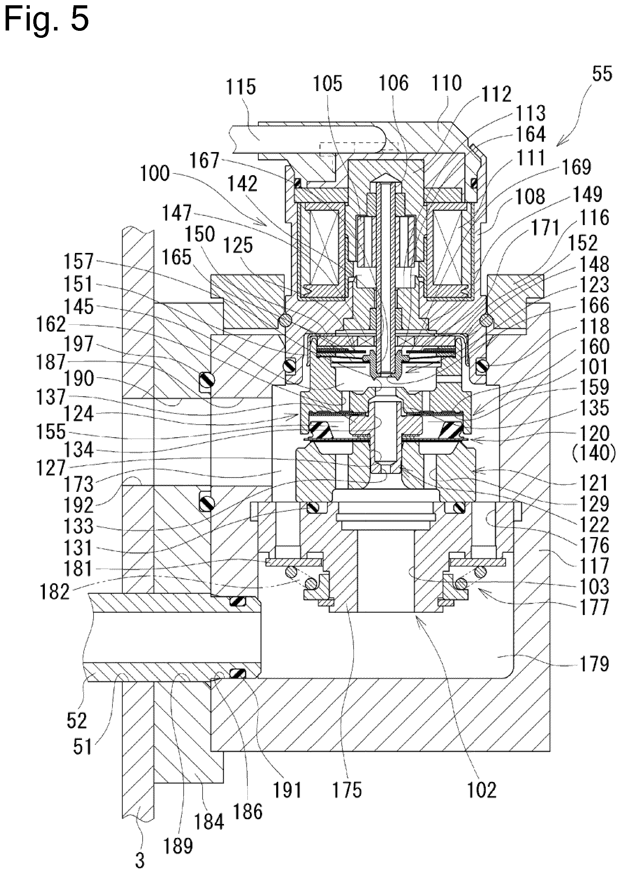

As illustrated in Fig. 1 and Fig. 5, the compression-side damping force generating mechanism 55 roughly includes a solenoid block 100, a valve block 101, and a communication block 102. The solenoid block 100, the valve block 101, and the communication block 102 are coaxially arranged in a parallel manner to the axial direction of the cylinder 2. The solenoid block 100 is arranged at an uppermost position. The valve block 101 is arranged under the solenoid block 100. The communication block 102 is arranged under the valve block. The valve block 101 corresponds to a damping force generating portion. The solenoid block 100 is intended to activate a pilot valve 123 that is a solenoid-driven pressure control valve that controls a valve-opening pressure of a main valve 120.

The solenoid block 100 is configured as below. A core 112 is fixedly fitted to an upper portion of a solenoid case 108. A plunger 105 supported within the solenoid case 108 so as to be movable in the axial direction and a hollow actuating rod 106 coupled to the plunger 105 are assembled to the core 112. A core 113 is press-fitted into the solenoid case 108 with the plunger 105 and the actuating rod 106 being assembled to the core 112. The solenoid case 108 is formed in a cylindrical shape. The solenoid case 108 has an upper end opening that is closed with an upper cover 110. A lead wire 115 extends out of the upper cover 110 in a circumferential direction of the outer tube 3. The lead wire 115 is arranged in a bent position toward the outer tube 3. The lead wire 115 is connected to an in-vehicle controller or the like of a rail vehicle. The circumferential extension of the lead wire 115 makes it easy to run the lead wire 115, as compared to when the lead wire 115 extends toward the outer tube 3.

A coil 111, the cores 112 and 113, the plunger 105, and the actuating rod 106 form a solenoid actuator. When the coil 111 is energized through the lead wire 115, the plunger 105 (actuating rod 106) generates axial thrust according to electric current.

The valve block 101 and the communication block 102 are accommodated in a case body 117 with an open upper end. The solenoid case 108 is liquid-tightly connected to the case body 117 by a seal member 118 and fixedly fitted to the case body 117 by an attachment member 116. The valve block 101 includes a main valve 120, a main body 121 on which the main valve 120 is seated, a pilot pin 122, a pilot valve 123, a pilot body 124 on which the pilot valve 123 is seated, and a fail valve 125. The pilot pin 122 is supported by a support hole 127 which is provided at a radial center of the main body 121 and extends through the main body 121 in the axial direction. The main body 121 is provided with a plurality of passages 129 arranged in the circumferential direction and extending through the main body 121 in the axial direction. The support hole 127 and the passages 129 of the main body 121 communicate with a communication passage 103 provided in an after-mentioned communication body 175 of the communication block 102. A portion of the main body 121, which encircles the passages 129 at a lower end of the main body 121, and a portion of the communication body 175 of the communication block 102, which encircles the communication passage 103 at an upper end of the communication body 175, are liquid-tightly sealed by a seal member 131.

The pilot pin 122 is formed in a cylindrical shape. Formed in the pilot pin 122 are an orifice passage 133 which opens a lower end portion of the pilot pin 122 and extends in the axial direction, and a large-diameter flow path 134 which communicates with the orifice passage 133, opens an upper end portion, and extends in the axial direction. A cut-away portion 135 is formed in an outer peripheral surface of an upper end portion of the pilot pin 122. The cut-away portion 135 extends in the axial direction. A circular protruding portion 137 is disposed at an axial center of an outer peripheral surface of the pilot pin 122 in an outwardly protruding manner. A lower end portion of the pilot pin 122 is supported by the support hole 127 of the main body 121. The support hole 127 thus comes into communication with the large-diameter flow path 134 and the orifice passage 133 of the pilot pin 122. A main disk valve 140 as the main valve 120 is supported between the circular protruding portion 137 of the pilot pin 122 and the main body 121.

The pilot body 124 is arranged on an upper end side of the pilot pin 122. The pilot pin 124 is formed to have a substantially H-shaped section. The pilot body 124 has an upper end opening which is closed by a holding plate 143 having a through-hole 142 at a radial center thereof. The actuating rod 106 extends through the through-hole 142. There is thus formed a valve chamber 145 between the pilot body 124 and the holding plate 143. The through-hole 142 of the holding plate 143 has an inner peripheral surface in which a plurality of communication passages 147 are circumferentially formed. A spacer 148 is arranged in a region expanding from a gap between the holding plate 143 and a bottom portion of the solenoid case 108 of the solenoid block 100 to an outer periphery of an upper portion of the pilot body 124. The spacer 148 includes a disk portion 150 having an insertion hole 149 and a cylindrical wall portion 151 extending from an outer peripheral edge of the disk portion 150 toward a lower end of the disk portion 150. The cylindrical wall portion 151 is formed in a wavelike shape along the circumferential direction. The disk portion 150 includes a plurality of cut-away portions 152. The cut-away portions 152 are radially formed in a range expanding from an inner peripheral surface of the insertion hole 149 of the disk portion 150 to an upper portion of the cylindrical wall portion 151.

A back pressure chamber 155 is formed in a region enclosed by the main disk valve 140 arranged at an upper end of the main body 121 and a lower end side of the pilot body 124. Formed at a radial center of the pilot body 124 is a small-diameter communication hole 157. The pilot body 124 includes a large-diameter support hole that downwardly extends from the small-diameter communication hole 157. The pilot pin 122 is supported by the large-diameter support hole of the pilot body 124. The small-diameter communication hole 157 of the pilot body 124 communicates with the large-diameter flow path 134 and the orifice 133 of the pilot pin 122. A slit disk 159 and a flexible disk 160 are supported between the circular protruding portion 137 of the pilot pin 122 and the pilot body 124. A plurality of passages 162 communicating with the valve chamber 145 are provided in the pilot body 124 along the circumferential direction. The small-diameter communication hole 157 of the pilot body 124 and the back pressure chamber 155 are in communication through the cut-away portion 135 provided in the pilot pin 122 and a slit of the slit disk 159.

The pilot valve 123 is detached from and seated in a portion around the small-diameter communication hole 157 of the pilot body 124. The pilot valve 123 includes a pilot valve member 164 and a thin plate-like spring member 165 configured to bias the pilot valve member 164 in a direction away from the pilot body 124. The pilot valve member 164 is detached from and seated in the pilot body 124 to open and close the small-diameter communication hole 157 of the pilot body 124. The pilot valve member 164 includes a through-hole 166 formed in a bottomed cylinder-like shape and provided in a lower end of the pilot valve member 164 and an accommodation hole 167 that communicates with the through-hole 166 and accommodates a lower end portion of the actuating rod 106. The lower end portion of the actuating rod 106 is accommodated in the accommodation hole 167 of the pilot valve member 164. A spring seat 169 is formed in an outer peripheral surface of the pilot valve member 164 on the side close to an upper end of the pilot valve member 164. The spring seat 169 protrudes in the radial direction. A plurality of fail disks 171 functioning as the fail valve 125 are provided in layers between an upper end side of the spring seat 169 and the holding plate 143. A first liquid chamber 173 is formed between the main body 121 and the pilot body 124 on one side and the case body 117 on the other.

The communication block 102 includes the cylindrical communication body 175 having the communication passage 103 extending in the axial direction, a plurality of flow holes 176, and a check valve 177. The flow holes 176 are provided in the communication body 175 so as to communicate with the first liquid chamber 173 and extend in the axial direction. The check valve 177 is arranged along the lower end opening of each of the flow holes 176. A second liquid chamber 179 is formed between the communication body 175 and the case body 117. The communication passage 103 of the communication body 175 communicates with the support hole 127 and the passages 129 of the main body 121. The plurality of flow holes 176 are formed around the communication passage 103 of the communication body 175 at intervals along the circumferential direction. The communication holes 176 axially extend through the communication body 175. The communication holes 176 each have an upper end which opens into the first liquid chamber 173. The check valve 177 is arranged at the lower end opening of each of the communication holes 176. The check valve 177 opens and closes the lower end opening of each of the communication holes 176. The check valve 177 allows the oil to flow only in a direction from the first liquid chamber 173 to the second liquid chamber 179. The check valve 177 includes a disk-like valve 181 that comes into contact with the lower end opening of each of the flow holes 176 and a spring 182 that biases the valve 181 in such a direction that the lower end opening of each of the flow holes 176 is closed.

A support block 184 is arranged between the case body 117 of the compression-side damping force generating mechanism 55 and the outer peripheral surface of the cylinder 2. A case-side support hole 186 and a case-side communication hole 187 are formed in a peripheral wall of the case body 117 on the side close to the cylinder 2. The case-side support hole 186 and the case-side communication hole 187 radially extend through the peripheral wall of the case body 117. The case-side communication hole 187 is located above the case-side support hole 186. Formed in the support block 184 are a block-side support hole 189 and a block-side communication hole 190. The block-side support hole 189 communicates with the case-side support hole 186 of the case body 117 to extend through the support block 184 in the radial direction. The block-side communication hole 190 communicates with the case-side communication hole 187 of the case body 117 to extend through the support block 184 in the radial direction. The compression-side communicating pipe 52 is supported by the block-side support hole 189 of the support block 184 and the case-side support hole 186 of the case body 117. A seal member 191 seals a gap between an inner peripheral surface of the case-side support hole 186 and an outer peripheral surface of the compression-side communicating pipe 52. A seal member 197 liquid-tightly seals a gap between the support block 184 and the case body 117 around the block-side communication hole 190 and the case-side communication hole 187. The compression-side communicating pipe 52 communicates with the second liquid chamber 179 in the case body 117. The block-side communication hole 190 of the support block 184 and the case-side communication hole 187 of the case body 117 communicate with the first liquid chamber 173 in the case body 117 and communicate with an outer tube-side communication hole 192 provided in the outer tube 3, to thereby communicate with the reservoir 4 through the outer tube-side communication hole 192.

Operation of the compression-side damping force generating mechanism 55 is discussed below.

When the coil 111 of the solenoid block 100 is energized, the pilot valve member 164 is displaced forward by the actuating rod 106 against a biasing force of the spring member 165, and a distal end of the pilot valve member 164 is seated in the pilot body 124. A valve-opening pressure of the pilot valve 123 is controlled by the energization of the coil 111, which enables pressure control using the pilot valve 123.

During a compression stroke, after flowing from the cylinder's lower chamber 2B through the compression-side communicating pipe 52 into the second liquid chamber 179, the oil flows into the communication passage 103 of the communication body 175 of the communication block 102 in the compression-side damping force generating mechanism 55. Before the main disk valve 140 of the main valve 120 is opened (when piston speed is in a low-speed area), the oil flows from the orifice passage 133 and the large-diameter flow path 134 of the pilot pin 122 through the small-diameter communication hole 157 of the pilot body 124 and pushes open the pilot valve member 164 of the pilot valve 123 to flow into the valve chamber 145. The oil in the valve chamber 145 then flows from the communication passages 147 of the holding plate 143 into the reservoir 4 through the cut-away portions 152 of the spacer 148, the first liquid chamber 173 in the case body 117, the case-side communication hole 187 of the case body 117, the block-side communication hole 190 of the support block 184, and the outer tube-side communication hole 192 provided in the outer tube 3. When the piston speed is increased, and the pressure in the cylinder's upper chamber 2A of the cylinder 2 reaches a valve-opening pressure of the main disk valve 140, the oil that flows into the communication passage 103 of the communication body 175 passes through the passages 129 of the main body 121, pushes open the main disk valve 140, and flows directly into the first liquid chamber 173 in the case body 117.

In the compression-side damping force generating mechanism 55, as described above, before the main disk valve 140 of the main valve 120 is opened (when the piston speed is in a low-speed area), a damping force is generated by the orifice passage 133 of the pilot pin 122 and the valve-opening pressure of the pilot valve member 164 of the pilot valve 123. After the main disk valve 140 is opened (when the piston speed is in a high-speed area), the damping force is generated according to an opening degree of the main disk valve 140. If the valve-opening pressure of the pilot valve 123 is adjusted by the energizing current applied to the coil 111, the damping force can be directly controlled, regardless of the piston speed. In other words, the valve-opening pressure of the pilot valve 123 causes the oil to flow through the small-diameter communication hole 157 of the pilot body 124, the cut-away portion 135 of the pilot pin 122, and the slit of the silt disk 159 into the back pressure chamber 155, which varies inner pressure of the back pressure chamber 155. The inner pressure of the back pressure chamber 155 acts in a direction of closing the main disk valve 140. Therefore, if the valve-opening pressure of the pilot valve 123 is controlled, the valve-opening pressure of the main disk valve 140 can be adjusted at the same time. This makes it possible to enlarge an adjustable range of damping-force characteristics.

If the thrust of the plunger 105 (actuating rod 106) is lost by a fail occurrence, such as disconnection of the coil 111 and malfunction of the in-vehicle controller, the pilot valve member 164 is retracted by the biasing force of the spring member 165, which brings an upper end surface of the spring seat 169 into contact with the fail disks 171 of the fail valve 125. When the pilot valve member 164 is in the foregoing position, the oil in the valve chamber 145 pushes open the fail valves 125 (fail disks 171) and flows through the communication passages 147 of the holding plate 143 and the cut-away portions 152 of the spacer 148 into the first liquid chamber 173 in the case body 117. Since the oil flow starting from the valve chamber 145 into the first liquid chamber 173 in the case body 117 is controlled by the fail valves 125 (fail disks 171) as just described, a desired damping force can be generated by setting the valve-opening pressure of the fail vales 125 (fail disks 171), and the inner pressure of the back pressure chamber 155, namely, the valve-opening pressure of the main disk valve 140 can be adjusted. Consequently, a proper damping force can be provided in the event of a fail occurrence.

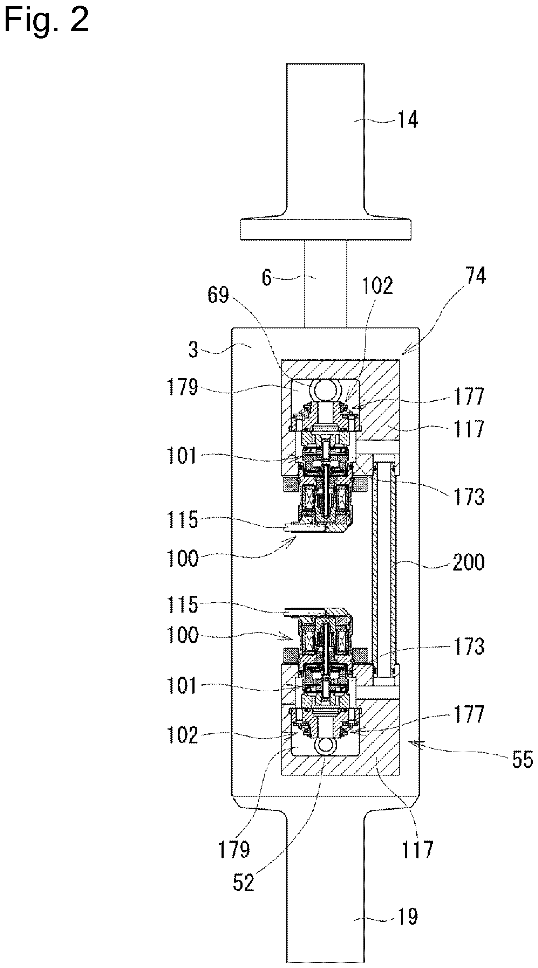

The extension-side damping force generating mechanism 74 is configured in a similar manner to the compression-side damping force generating mechanism 55. As illustrated in Fig. 1, however, the extension-side damping force generating mechanism 74 is so configured that the communication block 102 is arranged on the top of the extension-side damping force generating mechanism 74, that the valve block 101 is arranged under the communication block 102, and that the solenoid block 100 is arranged under the valve block 101. The solenoid block 100 of the compression-side damping force generating mechanism 55 and the solenoid block 100 of the extension-side damping force generating mechanism 74 are thus arranged opposite each other. In the extension-side damping force generating mechanism 74, the extension-side communicating pipe 69 is supported by the case-side support hole 194 provided in the case body 117 and the block-side support hole 195 provided in the support block 193. As illustrated in Fig. 2, the first liquid chamber 173 of the compression-side damping force generating mechanism 55 and the first liquid chamber 173 of the extension-side damping force generating mechanism 74 communicate with each other through a communicating pipe 200 extending in the axial direction.

The circulation holes 44 of the cylinder 2, the circular groove portion 46 of the guide member 45, the compression-side communicating pipe 52, the second and first liquid chambers 179 and 173 of the compression-side damping force generating mechanism 55, the case-side communication hole 187 of the case body 117, the block-side communication hole 190 of the support block 184, and the outer tube-side communication hole 192 of the outer tube 3 correspond to one side passage. The first flow path 64 of the rod guide 10, the extension-side communicating pipe 69, the second and first liquid chambers 179 and 173 of the extension-side damping force generating mechanism 74, the communicating pipe 200, the first liquid chamber 173 of the compression-side damping force generating mechanism 55, the case-side communication hole 187 of the case body 117, the block-side communication hole 190 of the support block 184, and the outer tube-side communication hole 192 of the outer tube 3 correspond to the other side passage.

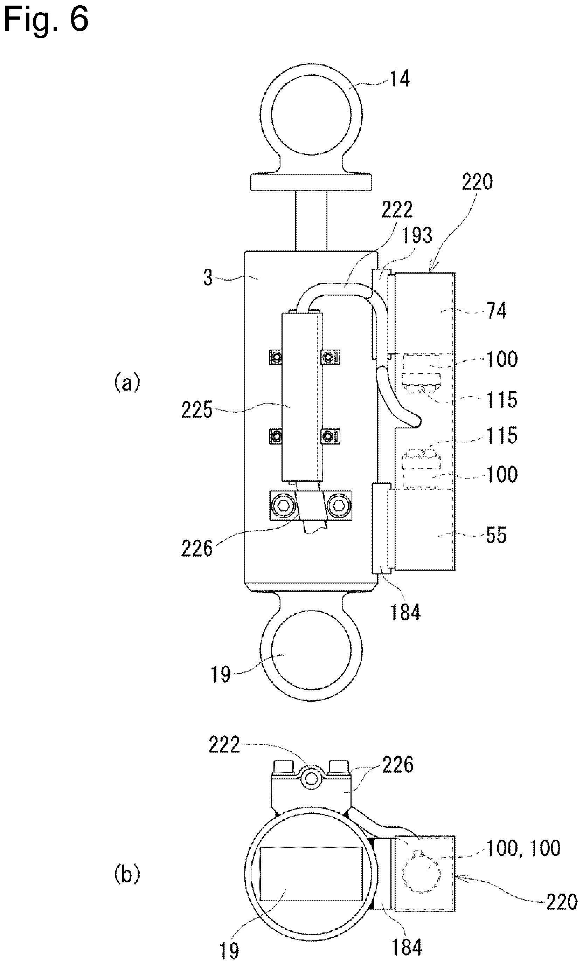

As illustrated in Fig. 6, the extension-side damping force generating mechanism 74 and the compression-side damping force generating mechanism 55 are integrally protected by a protection cover 220. The lead wire 115 extending from the solenoid block 100 of the extension-side damping force mechanism 74 and the lead wire 115 extending from the solenoid block 100 of the compression-side damping force generating mechanism 55 are unified into a single wire 222. The wire 222 extends out of the protection cover 220. The wire 222 is guided by a cylindrical guide block 225 provided in the outer peripheral surface of the outer tube 3 and extending in the axial direction and a clamp member 226 to be connected to the in-vehicle controller or the like.

The following description explains operation of the shock absorber 1a according to the first embodiment.

During the compression stroke of the piston rod 6, the check valve 36 of the base valve 16 is closed by the movement of the piston 5 within the cylinder 2. The oil in the cylinder's lower chamber 2B is pressurized, which causes the oil in the cylinder's lower chamber 2B to flow through the circulation holes 44 of the cylinder 2 and the circular groove portion 46 of the guide member 45 into the compression-side communicating pipe 52. The oil that flows into the compression-side communicating pipe 52 then flows into the compression-side damping force generating mechanism 55, to thereby generate a predetermined damping force. Thereafter, the oil in the compression-side damping force generating mechanism 55 flows from the first liquid chamber 173 of the case body 117 of the compression-side damping force generating mechanism 55 into the reservoir 4 through the case-side communication hole 187, the block-side communication hole 190 of the support block 184, and the outer tube-side communication hole 192 of the outer tube 3.

The oil by an amount equivalent to the movement of the piston 5 during the compression stroke is supplied from the reservoir 4 into the cylinder's upper chamber 2A through the outer tube-side communication hole 192 of the outer tube 3, the block-side communication hole 190 of the support block 184, the case-side communication hole 187 of the case body 117 of the compression-side damping force generating mechanism 55, the first liquid chamber 173 in the case body 117, the communicating pipe 200, the first and second liquid chambers 173 and 179 in the case body 117 of the extension-side damping force generating mechanism 74 (the check valve 177 is opened), the extension-side communicating pipe 69, and the first flow path 64. When the pressure of the cylinder's lower chamber 2B reaches a valve-opening pressure of the relief valve 25 of the piston 5, the relief valve 25 opens to release the pressure of the cylinder's lower chamber 2B to the cylinder's upper chamber 2A. The relief valve 25 thus prevents an excessive increase of the pressure of the cylinder's lower chamber 2B. When the pressure of the cylinder's lower chamber 2B reaches a valve-opening pressure of the relief valve 40 of the base valve 16, the relief valve 40 opens to release the pressure of the cylinder's lower chamber 2B to the reservoir 4. The relief valve 40 thus prevents an excessive increase of the pressure of the cylinder's lower chamber 2B.

During the extension stroke of the piston rod 6, the oil in the cylinder's upper chamber 2A is pressurized by the movement of the piston 5 in the cylinder 2. The oil in the cylinder's upper chamber 2A is divided into two flows, one of which flows into the first flow path 64, and the other into the second flow path 76. The oil that flows into the first flow path 64 then flows from the extension-side communicating pipe 69 into the extension-side damping force generating mechanism 74 to generate the predetermined damping force. Thereafter, the oil in the extension-side damping force generating mechanism 74 flows from the first liquid chamber 173 of the case body 117 of the extension-side damping force generating mechanism 74 into the reservoir 4 through the communicating pipe 200, the first liquid chamber 173 of the case body 117 of the compression-side damping force generating mechanism 55, the case-side communication hole 187 of the case body 117, the block-side communication hole 190 of the support block 184, and the outer tube-side communication hole 192 of the outer tube 3. The oil that flows into the second flow path 76 flows through the pipe 82 for the reservoir into the reservoir 4.

The oil by an amount equivalent to the movement of the piston 5 during the extension stroke flows from the reservoir 4 into the cylinder's lower chamber 2B through the outer tube-side communication hole 192 of the outer tube 3, the block-side communication hole 190 of the support block 184, the case-side communication hole 187 of the case body 117 of the compression-side damping force generating mechanism 55, the first and second liquid chambers 173 and 179 in the case body 117 of the compression-side damping force generating mechanism 55 (the check valve 177 is opened), the compression-side communicating pipe 52, and the circulation holes 44 of the cylinder 2. The oil by the amount equivalent to the movement of the piston 5 flows out of the reservoir 4, opens the check valve 36 of the base valve 16, passes through the passage 31, and is supplied into the cylinder's lower chamber 2B. When the pressure of the cylinder's upper chamber 2A reaches the valve-opening pressure of the relief valve 24 of the piston 5, the relief valve 24 opens to release the pressure of the cylinder's upper chamber 2A to the cylinder's lower chamber 2B. The relief valve 24 thus prevents an excessive increase of the pressure of the cylinder's upper chamber 2A.

According to the above-discussed shock absorber la of the first embodiment, in each of the extension-side damping force generating mechanism 74 and the compression-side damping force generating mechanism 55, the solenoid block 100, the valve block 101, and the communication block 102 are arranged in juxtaposition along the axial direction of the cylinder 2. The extension-side damping force generating mechanism 74 and the compression-side damping force generating mechanism 55 are spaced away from each other along the axial direction of the cylinder 2. This enables effective use of an axially extending space outside the outer tube 3 and further reduces an exclusively-occupied space of the compression-side damping force generating mechanism 55 and the extension-side damping force generating mechanism 74, which radially extends outside the outer tube 3.

According to a conventional shock absorber (Japanese Unexamined Patent Application Publication (Kokai) No. Hei 6-330977), a disk valve and a proportional solenoid in each of an extension-side damping force generating mechanism and a compression-side damping force mechanism are juxtaposed along a radial direction of a cylinder. A lead wire extending from the proportional solenoid of the extension-side damping force generating mechanism and a lead wire extending from the proportional solenoid of the compression-side damping force generating mechanism extend away from each other in a radial direction of the cylinder. This makes it difficult to run the lead wires and might increase an exclusively-occupied space.

In contrast, the shock absorber 1a according to the first embodiment is so configured that the extension-side damping force generating mechanism 74 and the compression-side damping force generating mechanism 55 are spaced away from each other in the axial direction of the cylinder 2 and therefore that the solenoid block 100 of the extension-side damping force generating mechanism 74 and the solenoid block 100 of the compression-side damping force generating mechanism 55 are arranged opposite each other. This makes it easy to run the lead wire 115 extending from the solenoid block 100 of the extension-side damping force generating mechanism 74 and the lead wire 115 extending from the solenoid block 100 of the compression-side damping force generating mechanism 55 and also reduces of the exclusively-occupied space of the compression-side damping force generating mechanism 55 and the extension-side damping force generating mechanism 74 including the wire 222 (unified lead wires 115, 115).

Since the shock absorber 1a of the first embodiment is so configured that the first flow path 64 communicating with the cylinder's upper chamber 2A and the extension-side damping force generating mechanism 74 is formed in the rod guide 10 that closes the upper end opening of the outer tube 3 and of the cylinder 2, the oil existing in the cylinder's upper chamber 2A during the extension stroke can flow easily through the first flow path 64 into the extension-side damping force generating mechanism 74.

The shock absorber 1a according to the first embodiment is so configured that the rod guide 10 is provided with the second flow path 76 communicating with the cylinder's upper chamber 2A and that the pipe 82 for the reservoir communicating with the reservoir 4 is connected to the second flow path 76. This makes it easy to remove air in the cylinder's upper chamber 2A.

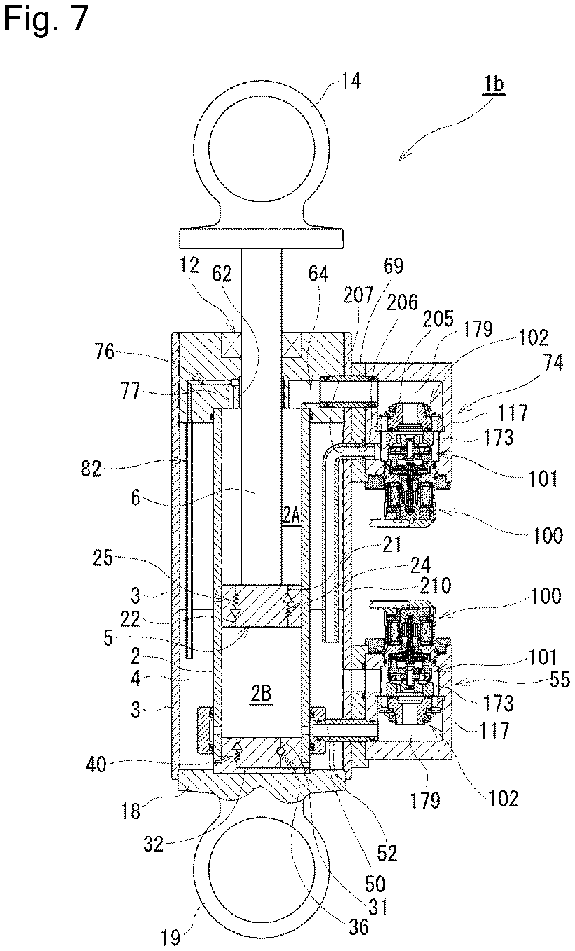

The shock absorber 1b according to a second embodiment is discussed below with reference to Fig. 7. The discussion of the shock absorber 1b according to the second embodiment merely explains differences from the shock absorber 1a according to the first embodiment.

Although the shock absorber 1a according to the first embodiment includes the communicating pipe 200 connecting the first liquid chamber 173 in the case body 117 of the extension-side damping force generating mechanism 74 and the first liquid chamber 173 in the case body 117 of the compression-side damping force generating mechanism 55, this communicating pipe 200 is not installed in the shock absorber 1b according to the second embodiment. Instead, a case-side support hole 205 is provided in a peripheral wall portion of a case body 117 of an extension-side damping force generating mechanism 74 on the side close to a cylinder 2. The case-side support hole 205 communicates with a first liquid chamber 173 of the case body 117 and radially extends through the peripheral wall portion of the case body 117 on the side close to the cylinder 2. A block-side support hole 206 is provided in a support block 193 on the side close to the extension-side damping force generating mechanism 74 at a position opposite the case-side support hole 205. The block-side support hole 206 radially extends through the support block 193. An outer tube-side support hole 207 is also provided in a peripheral wall portion of an outer tube 3 at a position opposite the block-side support hole 206. The outer tube-side support hole 207 radially extends through the peripheral wall portion of the outer tube 3. A pipe 210 for a reservoir, which is curved into the shape of letter L, extends through the case-side support hole 205, the block-side support hole 206, and the outer tube-side support hole 207. The first liquid chamber 173 in the case body 117 of the extension-side damping force generating mechanism 74 is thus brought into direct communication with a reservoir 4 through the pipe 210 for the reservoir. A lower end of the pipe 210 for the reservoir is located in oil contained in the reservoir 4.

Unlike the shock absorber 1a according to the first embodiment, the shock absorber 1b according to the second embodiment enables the oil that flows from a cylinder's upper chamber 2A to flow directly into the reservoir 4 using the pipe 210 for the reservoir from the first liquid chamber 173 in the case body 117 of the extension-side damping force generating mechanism 74 without passing the oil through the first liquid chamber 173 in the case body 117 of the compression-side damping force generating mechanism 55.

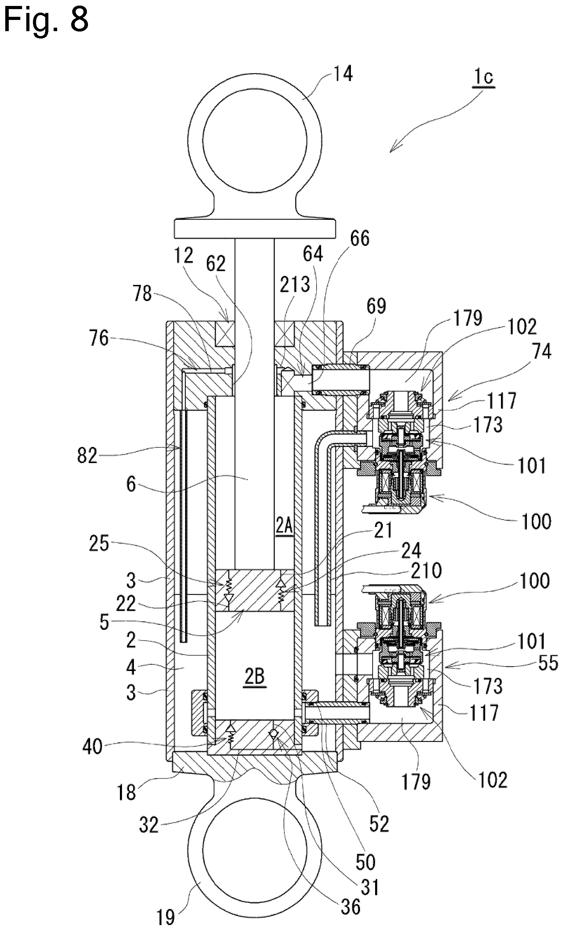

A shock absorber 1c according to a third embodiment is discussed below with reference to Fig. 8. The discussion of the shock absorber 1c according to the third embodiment merely explains differences from the shock absorber 1b according to the second embodiment.

Although the shock absorber 1b according to the second embodiment includes the second axial flow path 77 of the second flow path 76 provided in the rod guide 10, which axially extends from the cylinder's upper chamber 2A, this second axial flow path 77 is not installed in the shock absorber 1c according to the third embodiment. Instead, the shock absorber 1c according to the third embodiment is so configured that a circular groove portion 62 that opens into the cylinder's upper chamber 2A and a first flow path 64, which are provided in an inner peripheral surface of a rod guide 10, are in communication with each other through a radial passage 213. In the shock absorber 1c according to the third embodiment, a second radial flow path 78 of the second flow path 76 is located above the level of a first radial flow path 66 of the first flow path 64. In other words, the second radial flow path 78 of the second flow path 76 opens into the cylinder's upper chamber 2A at a position between a seal member 12 and the first radial flow path 66 of the first flow path 64.

The foregoing configuration prevents air in the cylinder's upper chamber 2A from being discharged into the extension-side damping force generating mechanism 74 and urges the air into the reservoir 4.

The invention is not limited to the above-discussed embodiments and includes various modification examples, provided that the modification examples fall within the scope of an appended independent claim. The embodiments are described in detail to facilitate the understanding of the invention.

The present application claims priority under Japanese Patent Application No. 2017-104552 filed on May 26, 2017.

### REFERENCE SIGN LIST

1a, 1b, 1c: shock absorber
2: cylinder
2A: cylinder's upper chamber (the other side chamber)
2B: cylinder's lower chamber (one side chamber)
3: outer tube
4: reservoir
5: piston
6: piston rod
10: rod guide (closing member)
55: compression-side damping force generating mechanism (first damping force generating mechanism)
74: extension-side damping force generating mechanism (second damping force generating mechanism)
76: second flow path (reservoir path)
82: pipe for a reservoir (reservoir path)
100: solenoid block (solenoid)
101: valve block (damping force generating portion)
173: first liquid chamber (liquid chamber)
200: communicating pipe
210: pipe for a reservoir

## Claims

1. A shock absorber (1a), comprising:
a cylinder (2) in which a hydraulic fluid is sealingly contained;
a reservoir (4) communicating into the cylinder, the reservoir in which a hydraulic fluid and gas are sealingly contained;
a piston (5) slidably inserted in the cylinder to divide an interior of the cylinder into a lower side chamber (2B) and an upper side chamber (2A);
a piston rod (6) having one end coupled to the piston and the other end extending outside the cylinder from an axial upper end side of the cylinder;
a lower side passage (52) communicating with the lower side chamber of the cylinder and communicating into the reservoir;
an upper side passage (66) communicating with the upper side chamber of the cylinder and communicating into the reservoir;
a compression-side damping force generating mechanism (55), disposed towards an axial lower end side opposite to the axial upper end side, and disposed in the lower side passage and configured to control a flow of a hydraulic fluid that flows out of the lower side chamber during a compression stroke of the piston rod to generate a damping force; and
an extension-side damping force generating mechanism (74), disposed towards the axial upper end side, and disposed in the upper side passage and configured to control a flow of a hydraulic fluid that flows out of the upper side chamber during an extension stroke of the piston rod to generate a damping force,
the compression-side damping force generating mechanism and the extension-side damping force generating mechanism being spaced away from each other along an axial direction of the cylinder,
the compression-side and extension-side damping force generating mechanisms each including a communication block (102), a damping force generating portion (101, 101) configured to generate a damping force and a solenoid (100, 100) configured to vary the damping force generated by the damping force generating portion,
the damping force generating portion of the compression-side damping force generating mechanism and the solenoid of the compression-side damping force generating mechanism being juxtaposed along the axial direction, of the cylinder,
the damping force generating portion of the extension-side damping force generating mechanism and the solenoid of the extension-side damping force generating mechanism being juxtaposed along the axial direction, of the cylinder,
**characterised in that**,
in the compression-side damping force generating mechanism (55), the solenoid block (100) is arranged at an uppermost position, the damping force generating portion (101) is arranged under the solenoid block (100) and the communication block (102) is arranged under the damping force generating portion,
**in that**, the solenoid block (100), the valve block (101), and the communication block (102) are coaxially arranged in a parallel manner to the axial direction of the cylinder,
**in that**, in the extension-side damping force generating mechanism (74), the communication block (102) is arranged on the top of the extension-side damping force generating mechanism (74), the damping force generating portion (101) is arranged under the communication block (102), and the solenoid block 100 is arranged under the damping force generating portion (101), and
**in that**, the solenoid block (100) of the compression-side damping force generating mechanism (55) and the solenoid block (100) of the extension-side damping force generating mechanism (74) are arranged opposite each other.

2. The shock absorber according to Claim 1,
wherein the cylinder has an end portion that is provided with a closing member (10) configured to guide the piston rod and close an opening formed in the end portion of the cylinder, and
wherein the upper side passage is formed in the closing member.

3. The shock absorber according to Claim 2,
wherein the closing member includes a reservoir path (76, 82) connecting the upper side chamber of the cylinder and the reservoir, and
wherein the upper side passage and the reservoir path are in communication with each other.

4. The shock absorber according to Claim 3,
wherein a seal member (12) is provided in the closing member on the axial upper end side of the cylinder, the seal member being configured to come into sliding contact with the piston rod to seal a gap between the piston rod and the closing member, and
wherein, in use of the shock absorber when the axial upper end side of the shock absorber is vertically above one side of the shock absorber, an opening (62) of the reservoir path, which is located on a side close to the upper side chamber of the cylinder, opens between the seal member and the upper side passage.

5. The shock absorber according to any one of Claims 1 to 4,
wherein the compression-side damping force generating mechanism includes a liquid chamber (179) for the compression-side damping force generating mechanism,
wherein, in use of the shock absorber during a compression stroke of the piston rod, a hydraulic fluid flows from the lower side chamber of the cylinder through the damping force generating portion of the compression-side damping force generating mechanism into the liquid chamber for the compression-side damping force generating mechanism, and the liquid chamber for the compression-side damping force generating mechanism communicates with the reservoir;
wherein the extension-side damping force generating mechanism includes a liquid chamber (179) for the extension-side damping force generating mechanism;
wherein, in use of the shock absorber during an extension stroke of the piston rod, a hydraulic fluid flows from the upper side chamber of the cylinder through the damping force generating portion of the extension-side damping force generating mechanism into the liquid chamber for the extension-side damping force generating mechanism, and
wherein the liquid chamber for the compression-side damping force generating mechanism and the liquid chamber for the extension-side damping force generating mechanism are in communication with each other through a communicating pipe (200).

## Patentansprüche

1. Stoßdämpfer (1a), umfassend:
einen Zylinder (2), in dem eine Hydraulikflüssigkeit dicht enthalten ist;
ein in den Zylinder mündendes Reservoir (4), in dem eine Hydraulikflüssigkeit und Gas dicht enthalten sind;
einen Kolben (5), der verschiebbar in den Zylinder eingesetzt ist, um das Innere des Zylinders in eine untere Seitenkammer (2B) und eine obere Seitenkammer (2A) zu unterteilen;
eine Kolbenstange (6), deren eines Ende mit dem Kolben verbunden ist und deren anderes Ende sich von einer axialen oberen Endseite des Zylinders nach außen erstreckt;
einen unteren Seitenkanal (52), der mit der unteren Seitenkammer des Zylinders in Verbindung steht und in das Reservoir mündet;
einen oberen Seitenkanal (66), der mit der oberen Seitenkammer des Zylinders in Verbindung steht und in das Reservoir mündet;
einen Mechanismus (55) zur Erzeugung einer kompressionsseitigen Dämpfungskraft, der zu einer axialen unteren Endseite hin angeordnet ist, die der axialen oberen Endseite gegenüberliegt, und der in dem unteren Seitenkanal angeordnet und so konfiguriert ist, dass er einen Fluss eines Hydraulikfluids steuert, das während eines Kompressionshubs der Kolbenstange aus der unteren Seitenkammer fließt, um eine Dämpfungskraft zu erzeugen; und
einen Mechanismus (74) zur Erzeugung einer ausfahrseitigen Dämpfungskraft, der zur axialen oberen Endseite hin angeordnet ist und in dem oberen Seitenkanal angeordnet und so konfiguriert ist, dass er einen Fluss eines Hydraulikfluids steuert, das während eines Ausfahrhubs der Kolbenstange aus der oberen Seitenkammer fließt, um eine Dämpfungskraft zu erzeugen,
wobei der Mechanismus zur Erzeugung der kompressionsseitigen Dämpfungskraft und der Mechanismus zur Erzeugung der ausfahrseitigen Dämpfungskraft entlang einer axialen Richtung des Zylinders voneinander beabstandet sind,
wobei die Mechanismen zur Erzeugung von kompressionsseitiger und ausfahrseitiger Dämpfungskraft jeweils einen Kommunikationsblock (102), einen Dämpfungskrafterzeugungsabschnitt (101, 101), der so konfiguriert ist, dass er eine Dämpfungskraft erzeugt, und ein Solenoid (100, 100), das so konfiguriert ist, dass es die von dem Dämpfungskrafterzeugungsabschnitt erzeugte Dämpfungskraft variiert, einschließen,
wobei der Dämpfungskrafterzeugungsabschnitt des Mechanismus zur Erzeugung der kompressionsseitigen Dämpfungskraft und das Solenoid des Mechanismus zur Erzeugung der kompressionsseitigen Dämpfungskraft entlang der axialen Richtung des Zylinders nebeneinander angeordnet sind,
wobei der Dämpfungskrafterzeugungsabschnitt des Mechanismus zur Erzeugung der ausfahrseitigen Dämpfungskraft und das Solenoid des Mechanismus zur Erzeugung der ausfahrseitigen Dämpfungskraft entlang der axialen Richtung des Zylinders nebeneinander angeordnet sind,
**dadurch gekennzeichnet, dass**
in dem Mechanismus (55) zur Erzeugung der kompressionsseitigen Dämpfungskraft
der Solenoidblock (100) in einer obersten Position angeordnet ist, der Dämpfungskrafterzeugungsabschnitt (101) unter dem Solenoidblock (100) angeordnet ist und der Kommunikationsblock (102) unter dem Dämpfungskrafterzeugungsabschnitt angeordnet ist,
dass der Solenoidblock (100), der Ventilblock (101) und der Kommunikationsblock (102) koaxial und parallel zur axialen Richtung des Zylinders angeordnet sind,
dass in dem Mechanismus (74) zur Erzeugung der ausfahrseitigen Dämpfungskraft der Kommunikationsblock (102) auf der oberen Seite des Mechanismus (74) zur Erzeugung der ausfahrseitigen Dämpfungskraft angeordnet ist, der Dämpfungskrafterzeugungsabschnitt (101) unter dem Kommunikationsblock (102) angeordnet ist, und der Solenoidblock 100 unter dem Dämpfungskrafterzeugungsabschnitt (101) angeordnet ist, und
dass der Solenoidblock (100) des Mechanismus zur Erzeugung der druckseitigen Dämpfungskraft (55) und der Solenoidblock (100) des Mechanismus zur Erzeugung der ausfahrseitigen Dämpfungskraft (74) einander gegenüberliegend angeordnet sind.

2. Stoßdämpfer nach Anspruch 1,
wobei der Zylinder einen Endabschnitt aufweist, der mit einem Verschlusselement (10) versehen ist, das so konfiguriert ist, dass es die Kolbenstange führt und eine in dem Endabschnitt des Zylinders ausgebildete Öffnung verschließt, und
wobei der obere Seitenkanal in dem Verschlusselement ausgebildet ist.

3. Stoßdämpfer nach Anspruch 2,
wobei das Verschlusselement einen Reservoirpfad (76, 82) einschließt, der die obere Seitenkammer des Zylinders und das Reservoir verbindet, und
wobei der obere Seitenkanal und der Reservoirpfad miteinander in Verbindung stehen.

4. Stoßdämpfer nach Anspruch 3,
wobei ein Dichtungselement (12) in dem Verschlusselement an der axialen oberen Endseite des Zylinders bereitgestellt ist, wobei das Dichtungselement so konfiguriert ist, dass es in Gleitkontakt mit der Kolbenstange kommt, um einen Spalt zwischen der Kolbenstange und dem Verschlusselement abzudichten, und
wobei sich bei Verwendung des Stoßdämpfers, wenn die axiale obere Endseite des Stoßdämpfers vertikal über einer Seite des Stoßdämpfers liegt, eine Öffnung (62) des Reservoirpfades, die auf einer Seite nahe der oberen Seitenkammer des Zylinders angeordnet ist, zwischen dem Dichtungselement und dem oberen Seitenkanal öffnet.

5. Stoßdämpfer nach einem der Ansprüche 1 bis 4,
wobei der Mechanismus zur Erzeugung der kompressionsseitigen Dämpfungskraft eine Flüssigkeitskammer (179) für den Mechanismus zur Erzeugung der kompressionsseitigen Dämpfungskraft einschließt,
wobei bei Verwendung des Stoßdämpfers während eines Kompressionshubs der Kolbenstange eine Hydraulikflüssigkeit von der unteren Seitenkammer des Zylinders durch den Dämpfungskrafterzeugungsabschnitt des Mechanismus zur Erzeugung der kompressionsseitigen Dämpfungskraft in die Flüssigkeitskammer für den Mechanismus zur Erzeugung der kompressionsseitigen Dämpfungskraft fließt, und die Flüssigkeitskammer für den Mechanismus zur Erzeugung der kompressionsseitigen Dämpfungskraft in Verbindung mit dem Reservoir steht;
wobei der Mechanismus zur Erzeugung der ausfahrseitigen Dämpfungskraft eine Flüssigkeitskammer (179) für den Mechanismus zur Erzeugung der ausfahrseitigen Dämpfungskraft einschließt;
wobei bei Verwendung des Stoßdämpfers während eines Ausfahrhubs der Kolbenstange eine Hydraulikflüssigkeit von der oberen Seitenkammer des Zylinders durch den Dämpfungskrafterzeugungsabschnitt des Mechanismus zur Erzeugung der ausfahrseitigen Dämpfungskraft in die Flüssigkeitskammer für den Mechanismus zur Erzeugung der ausfahrseitigen Dämpfungskraft fließt, und
wobei die Flüssigkeitskammer für den Mechanismus zur Erzeugung der kompressionsseitigen Dämpfungskraft und die Flüssigkeitskammer für den Mechanismus zur Erzeugung der ausfahrseitigen Dämpfungskraft durch ein Verbindungsrohr (200) miteinander in Verbindung stehen.

## Revendications

1. Amortisseur (1a), comprenant :
un cylindre (2) dans lequel un fluide hydraulique est contenu de manière étanche ;
un réservoir (4) communiquant dans le cylindre, réservoir dans lequel un fluide hydraulique et un gaz sont contenus de manière étanche ;
un piston (5) inséré de manière coulissante dans le cylindre pour diviser un intérieur du cylindre en une chambre de côté inférieur (28) et une chambre de côté supérieur (2A) ;
une tige de piston (6) présentant une extrémité couplée au piston et l'autre extrémité s'étendant à l'extérieur du cylindre à partir d'un côté d'extrémité supérieure axiale du cylindre ;
un passage de côté inférieur (52) communiquant avec la chambre de côté inférieur du cylindre et communiquant dans le réservoir ;
un passage de côté supérieur (66) communiquant avec la chambre de côté supérieur du cylindre et communiquant dans le réservoir ;
un mécanisme générant une force d'amortissement côté compression (55), disposé vers un côté d'extrémité inférieure axiale opposé au côté d'extrémité supérieure axiale, et disposé dans le passage de côté inférieur et configuré pour commander un flux d'un fluide hydraulique qui s'écoule en dehors de la chambre de côté inférieur pendant une course de compression de la tige de piston pour générer une force d'amortissement ; et
un mécanisme générant une force d'amortissement côté extension (74), disposé vers le côté d'extrémité supérieure axiale, et disposé dans le passage de côté supérieur et configuré pour commander un flux d'un fluide hydraulique qui s'écoule en dehors de la chambre de côté supérieur pendant une course d'extension de la tige de piston pour générer une force d'amortissement,
le mécanisme générant une force d'amortissement côté compression et le mécanisme générant une force d'amortissement côté extension étant espacés l'un de l'autre le long d'une direction axiale du cylindre,
le mécanisme générant une force d'amortissement côté compression et le mécanisme générant une force d'amortissement côté extension incluant chacun un bloc de communication (102), une partie générant une force d'amortissement (101, 101) configurée pour générer une force d'amortissement, et un solénoïde (100, 100) configuré pour faire varier la force d'amortissement générée par la partie générant une force d'amortissement,
la partie générant une force d'amortissement du mécanisme générant une force d'amortissement côté compression et le solénoïde du mécanisme générant une force d'amortissement côté compression étant juxtaposés le long de la direction axiale du cylindre,
la partie générant une force d'amortissement du mécanisme générant une force d'amortissement côté extension et le solénoïde du mécanisme générant une force d'amortissement côté extension étant juxtaposés le long de la direction axiale du cylindre,
**caractérisé en ce que**,
dans le mécanisme générant une force d'amortissement côté compression (55),
le bloc solénoïde (100) est agencé au niveau d'une position la plus élevée, la partie générant une force d'amortissement (101) est agencée sous le bloc solénoïde (100) et le bloc de communication (102) est agencé sous la partie générant une force d'amortissement,
**en ce que**, le bloc solénoïde (100), le bloc de soupapes (101), et le bloc de communication (102) sont coaxialement agencés d'une manière parallèle à la direction axiale du cylindre,
**en ce que**,
dans le mécanisme générant une force d'amortissement côté extension (74), le bloc de communication (102) est agencé sur le dessus du mécanisme générant une force d'amortissement côté extension (74), la partie générant une force d'amortissement (101) est agencée sous le bloc de communication (102), et le bloc solénoïde 100 est agencé sous la partie générant une force d'amortissement (101), et
**en ce que**,
le bloc solénoïde (100) du mécanisme générant une force d'amortissement côté compression (55) et le bloc solénoïde (100) du mécanisme générant une force d'amortissement côté extension (74) sont agencés l'un en face de l'autre.

2. Amortisseur selon la revendication 1,
dans lequel le cylindre présente une partie d'extrémité qui est prévue avec un élément de fermeture (10) configuré pour guider la tige de piston et fermer une ouverture formée dans la partie d'extrémité du cylindre, et
dans lequel le passage de côté supérieur est formé dans l'élément de fermeture.

3. Amortisseur selon la revendication 2,
dans lequel l'élément de fermeture inclut un trajet de réservoir (76, 82) reliant la chambre de côté supérieur du cylindre et le réservoir, et
dans lequel le passage de côté supérieur et le trajet de réservoir sont en communication l'un avec l'autre.

4. Amortisseur selon la revendication 3,
dans lequel un élément d'étanchéité (12) est prévu dans l'élément de fermeture sur le côté d'extrémité supérieure axiale du cylindre, l'élément d'étanchéité étant configuré pour venir en contact coulissant avec la tige de piston pour étanchéifier un espace entre la tige de piston et l'élément de fermeture, et
dans lequel, lors de l'utilisation de l'amortisseur lorsque le côté d'extrémité supérieure axiale de l'amortisseur est verticalement au-dessus d'un côté de l'amortisseur, une ouverture (62) du trajet de réservoir, qui est située sur un côté proche de la chambre de côté supérieur du cylindre, s'ouvre entre l'élément d'étanchéité et le passage de côté supérieur.

5. Amortisseur selon l'une quelconque des revendications 1 à 4,
dans lequel le mécanisme générant une force d'amortissement côté compression inclut une chambre à liquide (179) pour le mécanisme générant une force d'amortissement côté compression,
dans lequel, lors de l'utilisation de l'amortisseur pendant une course de compression de la tige de piston, un fluide hydraulique s'écoule à partir de la chambre de côté inférieur du cylindre à travers la partie générant une force d'amortissement du mécanisme générant une force d'amortissement côté compression dans la chambre à liquide pour le mécanisme générant une force d'amortissement côté compression, et la chambre à liquide pour le mécanisme générant une force d'amortissement côté compression communique avec le réservoir ;
dans lequel le mécanisme générant une force d'amortissement côté extension inclut une chambre à liquide (179) pour le mécanisme générant une force d'amortissement côté extension ;
dans lequel, lors de l'utilisation de l'amortisseur pendant une course d'extension de la tige de piston, un fluide hydraulique s'écoule à partir de la chambre de côté supérieur du cylindre à travers la partie générant une force d'amortissement du mécanisme générant une force d'amortissement côté extension dans la chambre à liquide pour le mécanisme générant une force d'amortissement côté extension, et
dans lequel la chambre à liquide pour le mécanisme générant une force d'amortissement côté compression et la chambre à liquide pour le mécanisme générant une force d'amortissement côté extension sont en communication l'une avec l'autre par l'intermédiaire d'un tuyau de communication (200).
